(19) Europäisches Patentamt / European Patent Office / Office européen des brevets

(11) **EP 2 318 854 B1**

(12) **FASCICULE DE BREVET EUROPEEN**

(45) Date de publication et mention
de la délivrance du brevet:
**03.10.2012 Bulletin 2012/40**

(21) Numéro de dépôt: **09757623.5**

(22) Date de dépôt: **05.06.2009**

(51) Int Cl.:
***G01S 19/20*** $^{(2010.01)}$

(86) Numéro de dépôt international:
**PCT/EP2009/056963**

(87) Numéro de publication internationale:
**WO 2009/147242 (10.12.2009 Gazette 2009/50)**

(54) **PROCEDE DE PROTECTION D'UN UTILISATEUR DE RECEPTEUR DE RADIONAVIGATION VIS-A-VIS DE MESURES DE PSEUDO-DISTANCES ABERRANTES**

VERFAHREN ZUM SCHUTZ EINES FUNKNAVIGATIONSEMPFÄNGERBENUTZERS VOR FEHLERHAFTEN PSEUDOSTRECKENMESSUNGEN

METHOD FOR PROTECTING A RADIO NAVIGATION RECEIVER USER AGAINST ABERRANT PSEUDO-RANGE MEASUREMENTS

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **06.06.2008 FR 0803169**

(43) Date de publication de la demande:
**11.05.2011 Bulletin 2011/19**

(73) Titulaire: **THALES**
**92200 Neuilly-sur-Seine (FR)**

(72) Inventeurs:
- **VAN DEN BOSSCHE, Mathias**
  **F-06156 Cannes La Bocca Cedex (FR)**
- **KAROUBY, Philippe**
  **F-06156 Cannes La Bocca Cedex (FR)**
- **MACABIAU, Christophe**
  **F-06156 Cannes La Bocca Cedex (FR)**
- **PAIMBLANC, Philippe**
  **F-06156 Cannes La Bocca Cedex (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A- 1 729 145**    **US-A1- 2008 074 317**

- **BROWN R GROVER ED - PARKINSON B W ET AL: "Receiver Autonomous Integrity Monitoring" GLOBAL POSITIONING SYSTEM: THEORY AND APPLICATIONS; [PROGRESS IN ASTRONAUTICS AND AERONAUTICS VOL. 163], WASHINTON, DC : AIAA, US, vol. 2, 1 janvier 1996 (1996-01-01), pages 143-165, XP008090948 ISBN: 978-1-56347-107-0**
- **WALTER AND P ENGE T: "Weighted RAIM for Precision Approach" PROCEEDINGS OF THE INSTITUTE OF NAVIGATION (ION) GPS, XX, XX, 1 septembre 1995 (1995-09-01), pages 1995-2004, XP002351332**
- **TSAI Y-H ET AL: "GPS fault detection and exclusion using moving average filters" IEE PROCEEDINGS: RADAR, SONAR & NAVIGATION, INSTITUTION OF ELECTRICAL ENGINEERS, GB, vol. 151, no. 4, 9 août 2004 (2004-08-09), pages 240-247, XP006022285 ISSN: 1350-2395**

**Description**

La présente invention se rapporte à un procédé de protection d'un utilisateur de récepteur de radionavigation vis-à-vis de mesures de pseudo-distances aberrantes.

L'erreur sur la position géographique indiquée par un récepteur de radionavigation par satellite dépend des erreurs qui entachent les mesures de pseudo-distances déterminées par l'algorithme qu'utilise ce récepteur et des erreurs contenues dans le message de navigation diffusé par le satellite.

Afin de limiter ces erreurs et d'assurer la protection des utilisateurs, il faut disposer de moyens permettant d'identifier de telles erreurs pour les éliminer et de calculer une borne sur l'erreur de position en fonction des mesures disponibles, en tenant compte de spécifications d'intégrité et de continuité inhérentes au contexte d'utilisation (atterrissage d'un aéronef, etc). Ces moyens constituent la base d'un dispositif disposant d'une fonction RAIM (*Receiver Autonomous Integrity Monitoring*). Les récepteurs GNSS d'aviation civile actuels ne peuvent être utilisés sans une fonction RAIM.

Les équipements actuels à fonction RAIM souffrent de deux problèmes :

- ils sont complètement intégrés, ce qui signifie qu'il n'est pas possible de choisir séparément l'équipement qui acquiert le signal de navigation et celui qui calcule la position de l'équipement qui assure les fonctions d'intégrité,
- ils sont basés sur des algorithmes de type moindre carrés qui sont déstabilisés par la présence de mesures erronées quelle que soit l'amplitude (même infinitésimale) de l'erreur qui affecte ces mesures, ce qui pose des problèmes de fiabilité des solutions de position proposées.

On connait d'après documents EP-A-1 729 145 et US2008/074317 A1 des procédés de sécurisation de données de radionavigation géo-référencées basés sur l'utilisation d'estimateurs statistiques de type « moindres carrés » ou dérivés (filtres), dont les inconvénients sont cités ci-dessus.

La présente invention a pour objet un procédé de protection d'un utilisateur de récepteur de radionavigation vis-à-vis de mesures de pseudo-distances aberrantes, ce procédé pouvant être mis en oeuvre par un équipement indépendant de celui qui acquiert le signal de navigation et qui calcule la position de l'équipement assurant les fonctions d'intégrité, et qui ne soit pas déstabilisé par la présence de mesures erronées, quelle que soit l'amplitude des erreurs affectant ces mesures.

Le procédé de protection conforme à l'invention est caractérisé, dans le cas le plus général, en ce que l'on pondère les N résidus de l'estimation du vecteur d'état lors de l'estimation de la solution de navigation, la pondération étant réalisée d'après la statistique estimée des erreurs de ces mesures, en utilisant des estimateurs statistiques robustes (tels que les Least Trimmed Squares Estimator, ou Minimum Covariance Determinant Estimator, ou M-estimator, ou A-,D-,GM-,L-,MM-P-,R-,S-or W-estimators ou MSTD), cette pondération pouvant être totale ou partielle. Si elle est totale, la prise en compte des résidus est totale, avec un facteur de pondération égal à 1 ou égal à 0 pour l'exclusion, et si elle est partielle, le facteur de pondération est compris entre 0 et 1. Le cas de la pondération totale couvre, entre autres, les méthodes robustes « RAIM-MSTD » et « RAIM-LTS », et le cas de la pondération partielle couvre les méthodes robustes de type « RAIM-M-estimateurs ». Les estimateurs statistiques robustes sont bien connus en soi, et sont décrits, par exemple, dans l'article de «Wikipedia» que l'on peut trouver à l'adresse suivante: http://en.wikipedia.org/wiki/ Robust estimator, ainsi que dans les références citées à la fin de cet article.

Selon une autre caractéristique de l'invention, on sélectionne le sous-ensemble de h résidus de l'estimation du vecteur d'état de moindre variance, que l'on utilise cette variance, majorée d'un coefficient d'adaptation, ainsi que la moyenne du même sous-ensemble, pour centrer puis normaliser les N entrées, qui, une fois mises au carré, sont comparées à un seuil statistique et rejetées si elles sont supérieures à ce seuil, avec h=N-1 et/ou N-2, N étant le nombre de résidus. Le but de la comparaison au seuil statistique est de ne pas avoir à isoler systématiquement les h résidus de l'estimation du vecteur d'état. C'est la méthode « RAIM-MSTD ».

Selon une autre caractéristique de l'invention, on sélectionne le sous-ensemble de N-h résidus de l'estimation du vecteur d'état tel que la somme de ces mesures au carré est minimale, on estime la moyenne et la variance de ce sous-ensemble, et on utilise cette moyenne et cette variance (cette dernière étant avantageusement multipliée par un coefficient d'adaptation supérieur à 1) pour centrer puis normaliser les N entrées, qui, une fois mises au carré, sont comparées à un seuil statistique et rejetées si elles sont supérieures à ce seuil. C'est la méthode « RAIM-LTS ».

Selon une autre caractéristique de l'invention, les N résidus de l'estimation du vecteur d'état sont pondérés par une méthode itérative qui consiste, à chaque itération, à estimer la moyenne et la variance des résidus de l'estimation du vecteur d'état, à calculer des poids à l'aide d'une fonction de pondération dont les entrées sont les résidus centrés et normalisés par la variance, et à multiplier les résidus par ces poids, le processus itératif s'arrêtant lorsque la somme des carrés des différences entre deux résidus consécutifs est inférieure à un seuil, la moyenne et la variance (cette dernière majorée d'un coefficient d'adaptation) issues de ce processus étant utilisées pour centrer puis normaliser les N entrées, qui, une fois mises au carré, sont comparées à un seuil statistique et rejetées si elles sont supérieures à ce seuil. C'est la méthode « RAIM-M-estimateurs ».

De façon détaillée, le procédé de protection conforme à l'invention est caractérisé en ce qu'il comporte les étapes suivantes de calcul de l'information d'intégrité par calcul des résidus de mesures de pseudo-distances obtenues à partir de la position géographique et du décalage d'horloge fournis par un récepteur primaire de radionavigation et à partir des mesures utilisées par le récepteur primaire pour obtenir ces valeurs :

- Formation de tous les sous-ensembles de résidus de cardinal h=N-1 et/ou N-2, N étant le nombre de résidus,
- Calcul de l'écart-type de chaque sous-ensemble et détermination, $\sigma_{min}$ étant le plus petit écart-type et utilisé pour pondérer les résidus, $h_{min}$ la valeur de cardinal pour laquelle $\sigma_{min}$ a été obtenu, $Y_{min}$ le vecteur de cardinal $h_{min}$ correspondant, et $m_{min}$ la moyenne de $Y_{min}$,

- Calcul d'un premier vecteur défini par :

$$r_{vec.1} = \frac{\sqrt{(Y - m_{min})^2}}{\sigma_{min}}$$

- les vecteurs $r_{vec.1}$ sont triés par ordre croissant pour obtenir : $r_{vec.1}^{trié}$

- calcul du facteur f défini par :

$$f = \left(\chi^2\right)^{-1}\left(\frac{h_{min}}{N}, 1\right), \text{ où } (\chi^2)^{-1}(.,1) \text{ est l'inverse}$$

de la distribution du $\chi^2$ à un degré de liberté,
- $\sigma_{min}$ est alors ré-pondéré de la façon suivante :

$$\sigma_{min.2} = \sqrt{\frac{r_{vec.1}^{trié}(h_{min})}{f}} * \sigma_{min}$$

- calcul d'un nouveau vecteur de résidus :

$$r_{vec.2} = \frac{\sqrt{(Y - m_{min})^2}}{\sigma_{min.2}}$$

- définition d'un seuil T tel que : $T = (\chi^2)^{-1}(P, 1)$, où P est une probabilité dont la valeur optimale doit être déterminée par simulation probabiliste,
- Chaque élément de $r_{vec.2}$ est comparé à T. Si $r_{vec.2}(i) > T$, on déclare qu'une panne est détectée, et le satellite i est exclu.

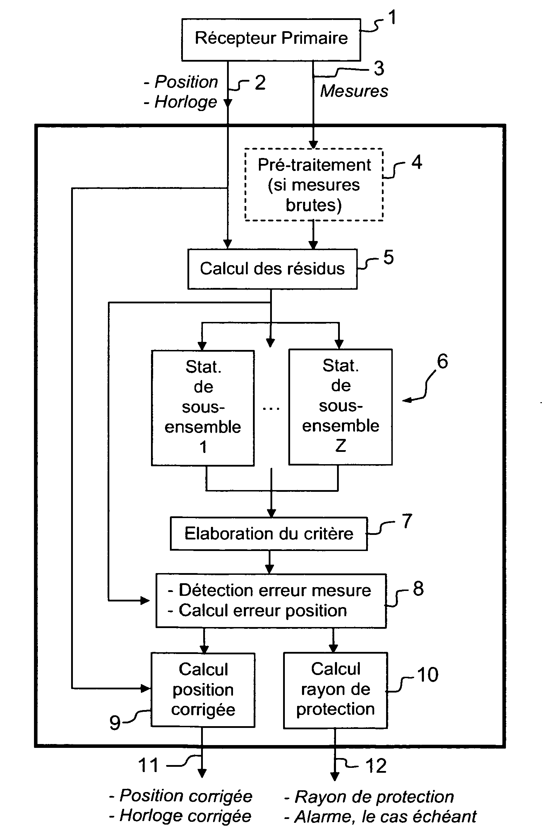

La présente invention sera mieux comprise à la lecture de la description détaillée d'un mode de réalisation, pris à titre d'exemple non limitatif et illustré par le dessin annexé, sur lequel :

- la figue unique est un diagramme simplifié des étapes successives de mise en oeuvre du procédé de l'invention.

Sur le diagramme du dessin, on a symbolisé en 1 un récepteur primaire classique de radionavigation par satellite fournissant d'une part, sur une voie 2, la solution estimée par le récepteur primaire (position géographique et décalage d'horloge), et sur une autre voie 3 les mesures de pseudo-distances utilisées par le récepteur primaire pour obtenir la solution.

Si les mesures transmises par le récepteur primaire ne sont pas prétraitées, il convient de leur faire subir un pré-traitement, connu en soi, les affranchissant des erreurs de propagation et de mesures, comme symbolisé par le rectangle 4 en traits interrompus.

Le calcul de l'information d'intégrité comporte ensuite les étapes suivantes, à partir du calcul des résidus (5) de mesures de pseudo-distances (notés Yi, où i est l'indice du satellite, et N est le nombre de ces résidus) :

1. Formation de tous les sous-ensembles de résidus de cardinal h=N-1 et/ou N-2,
2. Calcul de l'écart-type de chaque sous-ensemble (6). Soit $\sigma_{min}$ le plus petit écart-type. Celui-ci est pris comme référence (7). On définit ensuite :

   a. $h_{min}$ la valeur de cardinal pour laquelle $\sigma_{min}$ a été obtenu
   b. $Y_{min}$ le vecteur de cardinal $h_{min}$ correspondant,
   c. $m_{min}$ la moyenne de $Y_{min}$.

3. $\sigma_{min}$ est utilisé pour pondérer les résidus. On calcule un premier vecteur tel que :

$$r_{vec.1} = \frac{\sqrt{(Y - m_{min})^2}}{\sigma_{min}}$$

4. Pour les différents satellites, les premiers vecteurs $r_{vec.1}$ sont triés par ordre croissant pour obtenir :

$r_{vec.1}^{trié}$. On calcule par ailleurs le facteur f défini par :

$$f = \left(\chi^2\right)^{-1}\left(\frac{h_{min}}{N}, 1\right), \text{ où } \left(\chi^2\right)^{-1}(.,1), \text{ où}$$

$(\chi^2)^{-1}(.,1)$ est l'inverse de la distribution du $\chi^2$ à un degré de liberté.

5. $\sigma_{min}$ est alors repondéré de la façon suivante :

$$\sigma_{\min,2} = \sqrt{\frac{r_{vec,1}^{trié}(h_{\min})}{f}} * \sigma_{\min}$$

6. On calcule un nouveau vecteur de résidus :

$$r_{vec,2} = \frac{\sqrt{(Y - m_{\min})^2}}{\sigma_{\min,2}}$$

7. Le seuil T est défini par: $T=(\chi^2)^{-1}(P,1)$, où P est une probabilité dont la valeur optimale doit être déterminée par simulation par une technique probabiliste de type « Monte-Carlo ».

8. Chaque élément de $r_{vec,2}$ est comparé à T. Si $r_{vec,2}(i) > T$, on déclare qu'une panne est détectée, et le satellite i est exclu (8).

9. Une fois la détection des mesures éventuellement fautives effectuée, le calcul des rayons de protection (10) peut se faire de la façon habituelle compte tenu du nombre de mesures retenues.

On notera que P, qui représente la probabilité d'exclure un satellite non-fautif, n'est cependant pas directement assimilable à la probabilité d'exclusion spécifiée par l'OACI. D'autre part, le test au point 8 est effectué indépendamment pour chaque satellite : il n'y a donc pas de détection sans exclusion.

Les sorties de ce dispositif sont donc :

- Une solution de position éventuellement corrigée (11), si une erreur dans les mesures d'entrée est détectée.
- Une valeur de rayon de protection (12) qui permet de garantir la solution de position du dispositif, incluant éventuellement une alarme.

Le procédé de l'invention permet, de façon autonome de tout segment sol (donc implémentant une fonctionnalité RAIM) :

- d'augmenter les performances d'un récepteur (dit « primaire ») du commerce sans fonction d'intégrité,
- de détecter d'éventuelles erreurs contaminant des mesures en entrée du calcul de la position, par l'utilisation d'un algorithme statistique d'estimation robuste, c'est-à-dire réellement non affecté par les erreurs de mesures, et mettant en oeuvre un critère dynamique,
- de calculer une correction robuste pour la position fournie par le récepteur primaire en excluant une telle erreur si elle est détectée,
- de calculer des bornes sur l'erreur de position en fonction des mesures disponibles, et en tenant compte de spécifications d'intégrité et de continuité inhérentes au contexte d'utilisation (par exemple en phase d'atterrissage d'un aéronef). Ces bornes sont des seuils qui ne doivent pas être dépassés plus d'une fois pour N mesures de distances, avec $N=10^5$ à $10^7$, par exemple,
- des performances supérieures à celles de l'algorithme RAIM standard (utilisant la méthode des moindres carrés).

Du fait qu'il n'existe pas actuellement de procédé permettant d'ajouter une fonction d'intégrité à un récepteur ne la fournissant pas d'origine, les dispositifs de l'art antérieur, pour obtenir une performance équivalente d'intégrité/disponibilité, ne peuvent pas utiliser les algorithmes courants. Pour améliorer les performances, l'autre voie possible serait d'utiliser des traitements séquentiels ou filtrants, mais comme il est exclu de procéder à de tels traitement pour l'estimation du point (temps d'alarme d'intégrité trop long, qui est par exemple de l'ordre de 6 secondes pour des applications civiles, mais peut être de l'ordre de plusieurs centaines de secondes avec un filtrage efficace), il n'y a pas d'autre solution totalement autonome pour assurer l'intégrité à ce niveau de performance.

- Le procédé de l'invention permet d'optimiser le choix du matériel d'acquisition du signal de navigation indépendamment de celui de traitement RAIM.
- Le procédé RAIM rendu robuste selon l'invention permet de fiabiliser l'estimation du point (position géographique), en améliorant les performances d'intégrité (détection et exclusion) par rapport à un RAIM standard.
- Ce procédé apporte une capacité de détection et d'exclusion de mesures GNSS fautives optimisée par rapport au RAIM standard. En particulier, il permet d'améliorer la taux de disponibilité d'un système GNSS compatible avec les exigences aviation civile.

En résumé, le procédé de l'invention offre des performances bien meilleures que celles des algorithmes standard tant en termes d'intégrité (détection) que de disponibilité (fausses alarmes, optimisation des rayons de protection) et peut être appliqué à un récepteur de radio-navigation ne possédant pas d'origine de protection RAIM rendue robuste contre les erreurs de mesure.

**Revendications**

1. Procédé de protection d'un utilisateur de récepteur de radionavigation vis-à-vis de mesures de pseudo-distances aberrantes, **caractérisé en ce qu'**il comporte les étapes suivantes de calcul de l'information d'intégrité par calcul des résidus (5) de mesures de pseudo-distances obtenues à partir de la position géographique et du décalage d'horloge (2) fournis par un récepteur primaire de radionavigation et à partir des mesures (3) utilisées par le récepteur primaire pour obtenir ces valeurs :

a. Formation de tous les sous-ensembles de résidus de cardinal h=N-1 et/ou N-2, N étant le nombre de résidus,

b. Calcul de l'écart-type de chaque sous-ensemble (6) et détermination, σmin étant le plus petit écart-type et utilisé comme référence (7) pour pondérer les résidus, hmin la valeur de cardinal pour laquelle σmin a été obtenu, Ymin le vecteur de cardinal hmin correspondant, et mmin la moyenne de Ymin,

c. Calcul d'un premier vecteur défini par

$$r_{vec,1} = \frac{\sqrt{(Y - m_{min})^2}}{\sigma_{min}} \quad :$$

d. les vecteurs $r_{vec,1}$ sont triés par ordre croissant pour obtenir : $r_{vec,1}^{trié}$

e. calcul du facteur f défini par :

$$f = (\chi^2)^{-1}\left(\frac{h_{min}}{N}, 1\right),$$ , où $(\chi^2)^{-1}(.,1)$ est

l'inverse de la distribution du $\chi^2$ à un degré de liberté,

f. $\sigma_{min}$ est alors re-pondéré de la façon suivante :

$$\sigma_{min,2} = \sqrt{\frac{r_{vec,1}^{trié}(h_{min})}{f}} * \sigma_{min}$$

g. calcul d'un nouveau vecteur de résidus :

$$r_{vec,2} = \frac{\sqrt{(Y - m_{min})^2}}{\sigma_{min,2}}$$

h. définition d'un seuil T tel que : T = $(\chi^2)^{-1}$ (P, 1), où P est une probabilité dont la valeur optimale doit être déterminée par simulation probabiliste,

i. Chaque élément de $r_{vec,2}$ est comparé à T. Si $r_{vec,2}$ (i) > T, on déclare qu'une panne est détectée (8), et le satellite i est exclu...

**2.** Procédé selon la revendication 1, **caractérisé en ce que** la simulation probabiliste utilisée pour la définition du seuil T est une méthode du type « Monte-Carlo ».

**3.** Procédé selon la revendication 1 ou 2, **caractérisé**

**en ce que** lorsque les mesures transmises par le récepteur primaire ne sont pas prétraitées, on leur fait subir un pré-traitement les affranchissant des erreurs de propagation et de mesures (4).

**4.** Procédé selon l'une des revendications précédentes, **caractérisé en ce que** l'on calcule une position corrigée (9) lorsqu'une erreur dans les mesures d'entrée est détectée.

**5.** Procédé selon l'une des revendications précédentes, **caractérisé en ce que** l'on calcule une valeur d'horloge corrigée (11) lorsqu'une erreur dans les mesures d'entrée est détectée.

**6.** Procédé selon l'une des revendications précédentes, **caractérisé en ce que** l'on calcule des rayons de protection (10) relatifs aux mesures de façon habituelle.

**7.** Procédé selon l'une des revendications précédentes, **caractérisé en ce que** l'on émet une alarme (12) lorsqu'une erreur dans les mesures d'entrée est détectée.

**8.** Procédé selon l'une des revendications précédentes, **caractérisé en ce qu'**il est appliqué à un récepteur de radionavigation ne possédant pas d'origine de protection robuste contre les erreurs de mesure.

**Claims**

**1.** A method for protecting a radio navigation receiver user against distorted pseudo-distance measurements, **characterised in that** it comprises the following steps of calculating integrity information by calculating residuals (5) of pseudo-distance measurements obtained from the geographical position and the clock shift (2) supplied by a primary radio navigation receiver and from the measurements (3) used by the primary receiver to obtain these values:

a. forming all of the sub-sets of cardinal residuals h=N-1 and/or N-2, N being the number of residuals;

b. calculating the standard deviation of each sub-set (6), and determining, σmin being the smallest standard deviation and being used as a reference (7) for weighting the residuals, hmin being the cardinal value for which σmin has been obtained, Ymin being the corresponding cardinal vector of hmin, and mmin being the average of Ymin;

c. calculating a first vector that is defined by:

$$r_{vec,1} = \frac{\sqrt{(Y - m_{min})^2}}{\sigma_{min}} \; ;$$

d. sorting the vectors $r_{vec,1}$ in ascending order to obtain:: $r_{vec,1}^{sorted}$ ;

e. calculating factor f that is defined by: =

$$f = (\chi^2)^{-1}\left(\frac{h_{min}}{N}, 1\right)$$ where $(\chi^2)^{-1}(.,1)$ is the

inverse of the distribution of $\chi^2$ with one degree of freedom;

f. then re-weighting $\sigma_{min}$ as follows:

$$\sigma_{min,2} = \sqrt{\frac{r_{vec,1}^{sorted}(h_{min})}{f}} * \sigma_{min} \; ;$$

g. calculating a new vector of residuals:

$$r_{vec,2} = \frac{\sqrt{(Y - m_{min})^2}}{\sigma_{min,2}} \; ;$$

h. defining a threshold T so that: $T = (\chi^2)^{-1}(P, 1)$, where P is a probability, the optimal value of which must be determined by probabilistic simulation;

i. comparing each element of $r_{vec,2}$ with T; if $r_{vec,2}$ *(i) > T*, the detection (8) of a breakdown is declared and the satellite i is excluded.

2. The method according to claim 1, **characterised in that** the probabilistic simulation used for the definition of the threshold T is a "Monte-Carlo" type process.

3. The method according to claim 1 or 2, **characterised in that** when the measurements transmitted by the primary receiver are not pre-processed they are subjected to a pre-processing (4) operation of removing propagation and measurement errors.

4. The method according to any one of the preceding claims, **characterised in that** a corrected position (9) is calculated when an error in the input measurements is detected.

5. The method according to any one of the preceding claims, **characterised in that** a corrected clock value (11) is calculated when an error in the input measurements is detected.

6. The method according to any one of the preceding claims, **characterised in that** protection radii (10) relative to the measurements are calculated in the usual manner.

7. The method according to any one of the preceding claims, **characterised in that** an alarm (12) is emitted when an error in the input measurements is detected.

8. The method according to any one of the preceding claims, **characterised in that** it is applied to a radio navigation receiver that does not have a reference point of robust protection against measurement errors.

**Patentansprüche**

1. Verfahren zum Schützen eines Funknavigationsempfängers vor verzerrten Pseudodistanzmesswerten, **dadurch gekennzeichnet, dass** es die folgenden Schritte des Berechnens der Integritätsinformationen durch Berechnen von Resten (5) von Pseudodistanzmesswerten beinhaltet, die von der geografischen Position und der von einem primären Funknavigationsempfänger gelieferten Taktverschiebung (2) und von den Messungen (3) erhalten werden, die vom primären Empfänger zum Erhalten dieser Werte benutzt werden;

   a. Bilden aller Teilmengen von Cardinal-Resten h=N-1 und/oder N-2, wobei N die Zahl der Reste ist;
   b. Berechnen und Ermitteln der Standardabweichung jeder Teilmenge (6), wobei $\sigma_{min}$ die kleinste Standardabweichung ist und als Referenz (7) zum Gewichten der Reste verwendet wird, wobei $h_{min}$ der Cardinal-Wert ist, für den $\sigma_{min}$ erhalten wurde, wobei $Y_{min}$ der entsprechende Cardinal-Vektor von $h_{min}$ ist, und wobei $m_{min}$ das Mittel von $Y_{min}$ ist;
   c. Berechnen eines ersten Vektors, der definiert wird durch: $$r_{vec,1} = \frac{\sqrt{(Y - m_{min})^2}}{\sigma_{min}} \; ;$$

   d. Sortieren der Vektoren $r_{vec,1}$ in aufsteigender Reihenfolge, um Folgendes zu erhalten: $r_{vec,1}^{sortiert}$ ;

   e. Berechnen des Faktors f, der definiert wird

durch: $f = \left(\chi^2\right)^{-1}\left(\dfrac{h_{\min}}{N}, 1\right),$ wobei

$(\chi^2)^{-1}(.,1)$ die Umkehr der Verteilung von $\chi^2$ mit einem Freiheitsgrad ist;

f. dann erneutes Gewichten von $\sigma$min wie folgt:

$$\sigma_{\min,2} = \sqrt{\dfrac{r_{vec,1}^{sortiert}\left(h_{\min}\right)}{f}} * \sigma_{\min}$$

g. Berechnen eines neuen Vektors von Resten:

$$r_{vec,2} = \dfrac{\sqrt{\left(Y - m_{\min}\right)^2}}{\sigma_{\min,2}};$$

h. Definieren eines Schwellenwerts T, so dass: $T = (\chi^2)^{-1}(P, 1)$, wobei P eine Wahrscheinlichkeit ist, deren optimaler Wert durch probabilistische Simulation ermittelt werden muss;

i. Vergleichen jedes Elements von $r_{vec,2}$ mit T; wenn $r_{vec,2}$ *(i) > T* ist, dann wird die Erkennung (8) eines Ausfalls erklärt und Satellit i wird ausgeschlossen.

2. Verfahren nach Anspruch 1, **dadurch gekennzeichnet, dass** die für die Definition des Schwellenwerts T verwendete probabilistische Simulation eine Methode des Typs "Monte-Carlo" ist.

3. Verfahren nach Anspruch 1 oder 2, **dadurch gekennzeichnet, dass** vom primären Empfänger übertragene Messwerte, die nicht vorverarbeitet sind, einer Vorverarbeitung (4) unterzogen werden, bei der Ausbreitungs- und Messfehler entfernt werden.

4. Verfahren nach einem der vorherigen Ansprüche, **dadurch gekennzeichnet, dass** eine korrigierte Position (9) berechnet wird, wenn ein Fehler in den Eingangsmesswerten erkannt wird.

5. Verfahren nach einem der vorherigen Ansprüche, **dadurch gekennzeichnet, dass** ein korrigierter Taktwert (11) berechnet wird, wenn ein Fehler in den Eingangsmesswerten erkannt wird.

6. Verfahren nach einem der vorherigen Ansprüche, **dadurch gekennzeichnet, dass** Schutzradien (10) in Bezug auf die Messwerte auf gewöhnliche Weise berechnet werden.

7. Verfahren nach einem der vorherigen Ansprüche, **dadurch gekennzeichnet, dass** ein Alarm (12) ausgegeben wird, wenn ein Fehler in den Eingangsmesswerten erkannt wird.

8. Verfahren nach einem der vorherigen Ansprüche, **dadurch gekennzeichnet, dass** es auf einen Funknavigationsempfänger angewandt wird, der keinen Referenzpunkt für robusten Schutz vor Messfehlern hat.

Récepteur Primaire — 1

- Position — 2
- Horloge

Mesures — 3

Pré-traitement
(si mesures
brutes) — 4

Calcul des résidus — 5

Stat.
de
sous-
ensemble
1

...

Stat.
de
sous-
ensemble
Z

6

Elaboration du critère — 7

- Détection erreur mesure
- Calcul erreur position — 8

Calcul
position
corrigée

9

Calcul
rayon de
protection — 10

11 —

12 —

- Position corrigée
- Horloge corrigée

- Rayon de protection
- Alarme, le cas échéant

**EP 2 318 854 B1**

## RÉFÉRENCES CITÉES DANS LA DESCRIPTION

**Documents brevets cités dans la description**

- EP 1729145 A
- US 2008074317 A1